# FASCICULE DE BREVET EUROPEEN

(11) **EP 0 383 662 B1**
(45) Date de publication et mention de la délivrance du brevet: **06.10.1993**
(21) Numéro de dépôt: 90400365.4
(22) Date de dépôt: 09.02.1990
(51) Int. Cl.: G21C 7/10

(54) **Elément mobile d'un assemblage absorbant d'un réacteur nucléaire à neutrons rapides**
Bewegliches Element einer Absorbereinheit eines schnellen Neutronen-Kernreaktors
Mobile element of an absorber assembly of a fast neutron nuclear reactor

(30) Priorité: 14.02.1989 FR 8901896
(43) Date de publication de la demande: 22.08.1990
(73) Titulaire: FRAMATOME, 92400 Courbevoie (FR)
(72) Inventeur: Berte, Michel, F-69300 Caluire (FR)
(74) Mandataire: Bouget, Lucien

(56) Documents cités:
- EP-A- 0 060 778
- EP-A- 0 119 289
- PATENT ABSTRACTS OF JAPAN, vol. 1, no. 101, 8 septembre 1977, page 2908 M 77 & JP-A-52 41 793 (HITACHI SEISAKUSHO K.K.) 31-03-1977

## Description

L'invention concerne un élément mobile d'un assemblage absorbant d'un réacteur nucléaire à neutrons rapides refroidi par un métal liquide.

Dans les réacteurs nucléaires à neutrons rapides, le coeur du réacteur est constitué par différentes sortes d'assemblages de forme prismatique disposés verticalement et côte à côte à l'intérieur de la cuve du réacteur qui est remplie d'un métal liquide de refroidissement généralement constitué par du sodium.

La plupart des assemblages du coeur renferme du matériau combustible fissile ou fertile participant à l'activité neutronique dans le coeur.

D'autres assemblages, appelés assemblages absorbants, sont utilisés pour assurer le pilotage ou l'arrêt du réacteur. Ces assemblages comportent un fourreau de forme tubulaire qui est placé dans le coeur avec son axe en position verticale, la partie inférieure du fourreau étant insérée dans le support de coeur.

La partie active de l'assemblage absorbant est constituée par un élément mobile dans la direction verticale à l'intérieur du fourreau renfermant un matériau absorbant les neutrons, à l'intérieur d'une enveloppe de forme tubulaire.

Le matériau absorbant est généralement contenu à l'intérieur de tubes qui constituent des barreaux disposés verticalement à l'intérieur de l'enveloppe de l'élément mobile et suspendus par leur extrémité supérieure.

L'enveloppe comporte un embout supérieur fixé à l'une de ses extrémités et portant les dispositifs d'accrochage et de suspension des barreaux.

L'élément mobile comporte également un embout inférieur dont la fonction principale est de retenir les éléments absorbants dans l'enveloppe creuse, dans le cas très improbable d'une rupture d'un barreau ou de son dispositif de support. La chute d'un élément absorbant à l'extérieur de l'enveloppe de l'élément mobile aurait pour conséquence, d'une part la réduction de l'effet absorbant nécessaire pour contrôler la réactivité du coeur et d'autre part, le blocage éventuel de l'élément mobile, dans le cas où le barreau viendrait se coïncer à l'intérieur du fourreau.

Dans le cas d'un blocage de l'élément mobile, il n'est plus possible d'obtenir son insertion complète dans le coeur, lors d'un arrêt d'urgence ou d'un arrêt programmé du réacteur.

L'embout inférieur de l'élément mobile des assemblages absorbants est percé d'ouvertures permettant le passage du liquide de refroidissement du réacteur qui vient ainsi en contact avec les barreaux absorbants contenus dans l'enveloppe.

La partie inférieure de l'élément mobile d'un assemblage absorbant correspondant à l'embout de retenue se trouve le plus souvent, pendant le fonctionnement du réacteur, située dans la zone du coeur où le flux de neutrons est maximal.

Les matériaux constituant cette partie inférieure de l'élément mobile subissent donc une fragilisation et un gonflement sous l'effet de l'irradiation.

Pour limiter l'effet du gonflement des matériaux, ceux-ci sont écrouis, en particulier dans les zones soumises à une forte irradiation. L'embout inférieur de retenue et l'enveloppe creuse de l'élément mobile des assemblages absorbants sont réalisés en utilisant des matériaux écrouis et l'embout inférieur est relié à l'enveloppe creuse, généralement par soudure.

Le soudage a pour effet de supprimer l'état d'écrouissage dans le cordon de soudure, si bien que la liaison soudée de l'embout inférieur est soumise à un gonflement différentiel générant des contraintes mécaniques élevées.

Pour des raisons économiques, on cherche à prolonger la durée de séjour en réacteur des assemblages absorbants et, comme le gonflement des matériaux est proportionnel à la durée d'irradiation, il peut s'avérer impossible de satisfaire les règles de dimensionnement habituelles des éléments permettant de garantir leur tenue mécanique en service. Il est donc nécessaire de limiter la durée de vie des assemblages absorbants, pour tenir compte des effets de gonflement sous irradiation.

Dans certains cas, l'enveloppe creuse et l'embout inférieur de l'élément mobile des assemblages absorbants ont une section hexagonale, si bien que la réalisation d'une liaison soudée acceptable peut s'avérer difficile.

On a donc proposé d'autres solutions utilisant par exemple une liaison mécanique par vis ou par pions entre l'embout inférieur et l'enveloppe de l'élément mobile. Cependant, les organes correspondants assemblés par liaison mécanique doivent être immobilisés par soudure pour éviter un démontage intempestif en service. On retrouve alors l'inconvénient des liaisons soudées soumises au flux de neutrons.

On a proposé également de relier l'enveloppe et l'embout inférieur en utilisant une méthode de sertissage par magnétoformage. Ce mode de liaison ne peut cependant pas s'appliquer à des pièces de section hexagonale.

Le but de l'invention est donc de proposer un élément mobile d'un assemblage absorbant d'un réacteur nucléaire à neutrons rapides comportant une enveloppe tubulaire sur laquelle est fixé, à l'une de ses extrémités, un embout de suspension de barreaux en matériau absorbant les neutrons et, à son autre extrémité, un embout de retenue des barreaux à l'intérieur de l'enveloppe percé d'ouvertures de passage de fluide, l'embout de retenue de l'élément mobile étant fixé sur l'enveloppe, de manière à éviter les inconvénients d'une liaison soudée et à pouvoir être appliqué de manière simple à une enveloppe de forme prismatique, par exemple à section hexagonale.

Dans ce but, l'embout de retenue et l'enveloppe comportent des moyens d'assemblage correspondants du type à baïonnette disposés dans des directions radiales de l'enveloppe, engageables les uns avec les autres par déplacement et orientation de l'embout à l'intérieur de l'enveloppe, autour de l'axe de l'enveloppe, des moyens de blocage de l'embout en position engagée dans l'enveloppe étant placés en position de verrouillage, après engagement des moyens d'assemblage correspondants de l'embout et de l'enveloppe.

Afin de bien faire comprendre l'invention, on va maintenant décrire, à titre d'exemples non limitatifs, deux modes de réalisation d'un élément mobile suivant l'invention pour un assemblage absorbant d'un réacteur nucléaire à neutrons rapides refroidi par du sodium.

La figure 1A est une vue en coupe par un plan vertical d'un assemblage absorbant d'un réacteur nucléaire à neutrons rapides dont l'élément mobile est en position haute.

La figure 1B est une vue en coupe par un plan vertical d'un assemblage absorbant d'un réacteur nucléaire à neutrons rapides dont l'élément mobile est en position basse.

La figure 2 est une vue en coupe par un plan vertical de la partie inférieure de l'élément mobile suivant l'invention d'un assemblage absorbant d'un réacteur nucléaire à neutrons rapides.

La figure 3 est une vue à plus grande échelle du détail 3 de la figure 2.

Les figures 4A et 4B sont des vues en coupe suivant 4-4 de la figure 2.

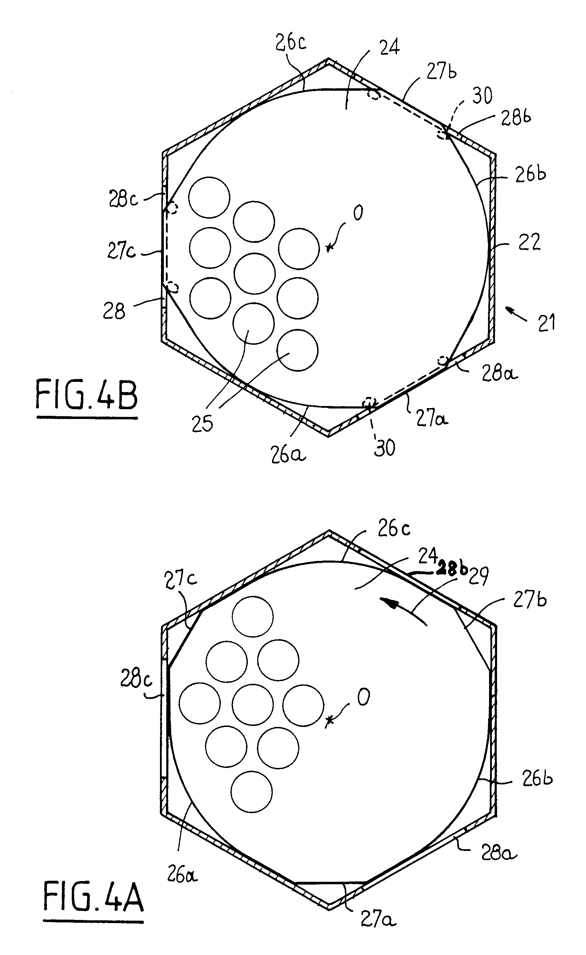

La figure 4A montre l'embout inférieur dans sa position d'introduction dans l'enveloppe, avant verrouillage.

La figure 4B montre l'embout de retenue en position verrouillée à l'intérieur de l'enveloppe.

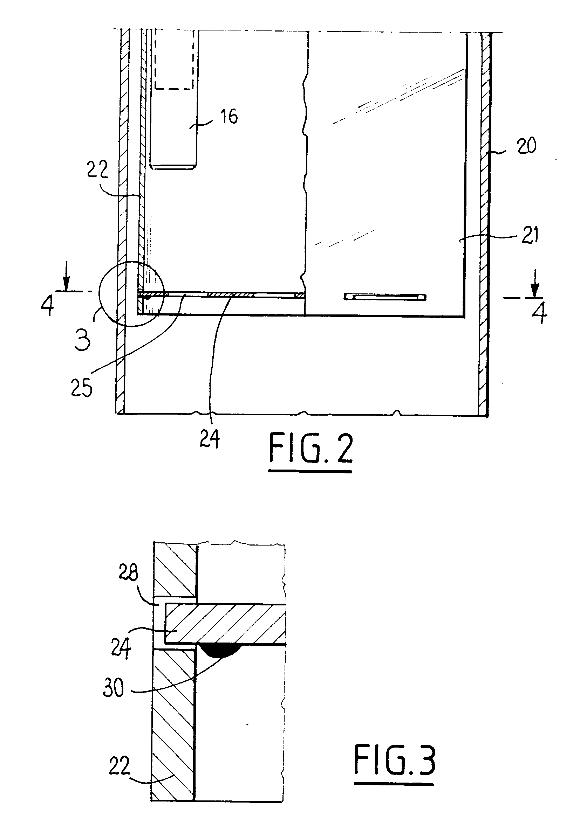

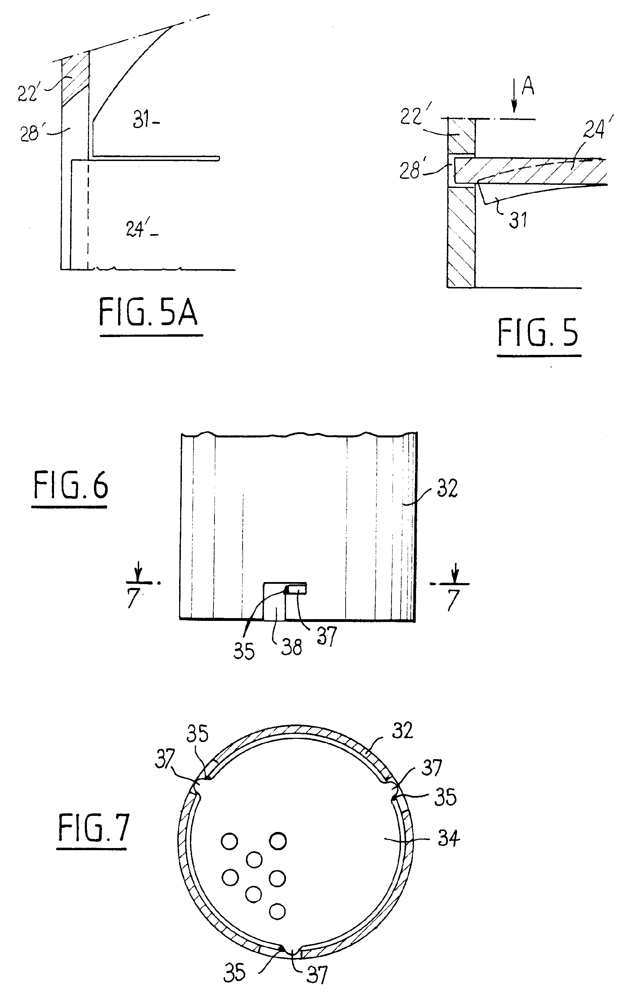

La figure 5 est une vue de détail analogue à la vue de la figure 3, d'une variante de réalisation des moyens de blocage de l'embout à l'intérieur de l'enveloppe.

La figure 5A est une vue de dessus suivant A-A de la figure 5.

La figure 6 est une vue en élévation latérale de la partie inférieure de l'enveloppe d'un élément mobile suivant un second mode de réalisation.

La figure 7 est une vue en coupe suivant 7-7 de la figure 6.

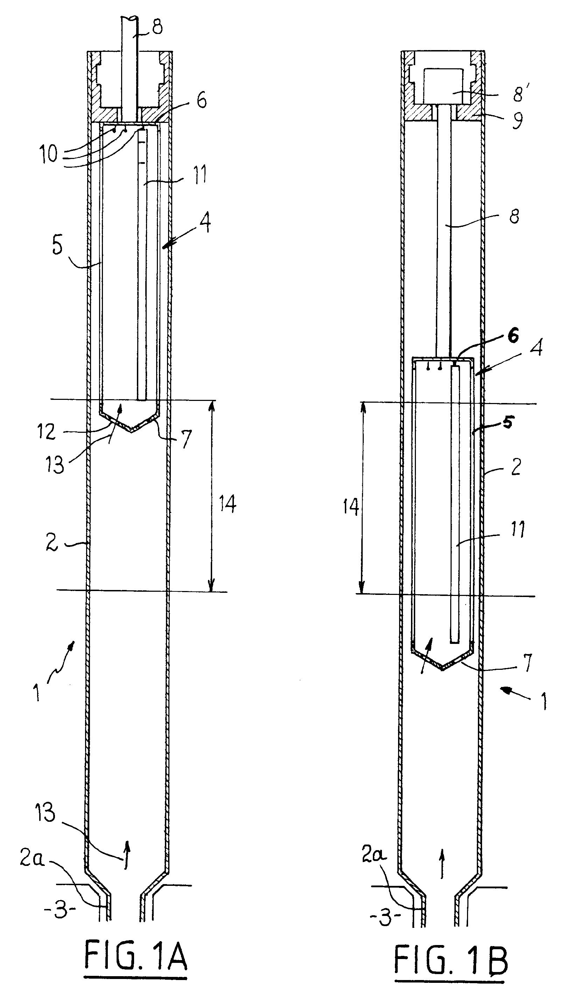

Sur les figures 1A et 1B, on voit un assemblage absorbant d'un réacteur nucléaire à neutrons rapides désigné de manière générale par le repère 1 et comportant un fourreau tubulaire 2 dont la partie inférieure 2a est engagée dans le support 3 du coeur du réacteur, de manière que le fourreau 2 soit disposé avec son axe vertical.

L'élément absorbant mobile proprement dit de l'assemblage 1 désigné de manière générale par le repère 4 est constitué par une enveloppe tubulaire 5, deux embouts 6 et 7 fixés aux extrémités de l'enveloppe 5 et une tige 8 reliée à l'embout supérieur 6 de l'élément 4 qui est monté à l'intérieur du fourreau 2 de façon à être mobile dans la direction axiale du fourreau entre une position haute représentée sur la figure 1A et une position basse représentée sur la figure 1B. La tige 8 est reliée à un dispositif de déplacement dans la direction verticale (non représenté) et solidaire à sa partie supérieure d'une butée 8' venant en appui, dans la position basse de l'élément 4, sur un épaulement d'une pièce d'extrémité 9 du fourreau 2.

L'embout supérieur 6 de l'élément mobile 4 porte, sur sa face inférieure opposée à sa face reliée à la tige 8, un ensemble de rails 10 assurant la suspension de barreaux absorbants 11 constitués par des tubes renfermant un matériau absorbant fortement les neutrons.

Dans le cas de l'assemblage absorbant représenté sur les figures 1A et 1B, l'embout inférieur 7 est réalisé sous forme conique et comporte des ouvertures 12 de passage du sodium liquide (flèche 13), lorsque le réacteur est en fonctionnement et que du sodium liquide de refroidissement circule dans le coeur dans la direction verticale et de bas en haut.

Sur la figure 1A, l'élément mobile 4 est dans sa position haute correspondant au fonctionnement normal du réacteur. Dans cette position haute, seule la partie inférieure de l'enveloppe 5 et l'embout inférieur 7 se trouvent dans la zone 14 correspondant à la zone du coeur dans laquelle l'activité neutronique est maximale.

Sur la figure 1B, on a représenté la position de l'élément mobile 4 d'un assemblage absorbant correspondant à la position d'insertion maximale, pour obtenir l'arrêt du réacteur. Dans cette position, la butée 8' de la tige 8 repose sur la pièce d'extrémité supérieure 9 du fourreau 2 et les barreaux absorbants 11 occupent toute la hauteur de la zone 14 à forte activité neutronique.

Dans le cas de la rupture d'un crayon absorbant 11 ou du rail de suspension 10 de ce crayon 11, l'embout inférieur 7 assure la retenue du barreau 11 à l'intérieur de l'enveloppe 5 de l'élément mobile 4. Cet élément mobile absorbant conserve donc pratiquement son pouvoir absorbant, dans la mesure où le crayon 11 reste à l'intérieur de l'enveloppe 5. De plus, on évite ainsi la chute et le blocage du barreau 11 à l'intérieur du fourreau 2, ce qui dans certains cas pourrait interdire le déplacement vers le bas de l'élément mobile 4 pour le mettre dans sa position représentée sur la figure 1B.

Dans le cas où l'embout inférieur 7 est fixé par soudure sur la partie inférieure de l'enveloppe 5, ces éléments réalisés en un métal écroui subissent un recuit au cours du soudage supprimant les effets de l'écrouissage. La zone de jonction entre l'embout inférieur 7 et la partie inférieure de l'enveloppe 5 qui se trouve, pendant le fonctionnement normal du réacteur, dans la zone 14 à forte activité neutronique est donc susceptible de subir une fragilisation et un gonflement important sous irradiation, pendant la marche normale du réacteur.

Sur les figures 2, 3, 4A et 4B, on a représenté la partie inférieure d'un élément mobile selon l'invention dont l'embout inférieur est fixé à la base de l'enveloppe d'une manière efficace, sans qu'il soit nécessaire de souder les deux pièces assemblées l'une sur l'autre.

Sur la figure 2, on a représenté une zone du fourreau 20 d'un assemblage absorbant situé au niveau de la partie inférieure de l'élément mobile 21 suivant l'invention.

Cet élément mobile 21 présente une structure générale analogue à la structure de l'élément mobile 4 représentée sur les figures 1A et 1B.

L'enveloppe tubulaire 22 de l'élément mobile 21 est réalisée sous forme prismatique et présente une section hexagonale visible sur les figures 4A et 4B.

Cette enveloppe 22 porte à sa partie inférieure représentée sur la figure 2, un embout inférieur 24 assurant la retenue des barreaux absorbants 16 suspendus à l'intérieur de l'enveloppe 22 de l'élément mobile 21, dans le cas très improbable de la rupture d'un barreau 16 ou de son rail de suspension.

L'embout 24 est constitué, dans le mode de réalisation décrit et représenté sur les figures 2, 3, 4A et 4B, par une simple plaque plane traversée par des orifices de passage de sodium 25 et présentant, suivant la section transversale de l'enveloppe 22, une forme particulière qui sera décrite ci-dessous, visible sur les figures 4A et 4B. La plaque 24 comporte un bord périphérique présentant trois parties courbes 26a, 26b et 26c séparées les unes des autres par trois parties droites 27a, 27b et 27c.

Si l'on désigne par O le centre de la plaque 24, c'est-à-dire le point d'intersection de l'axe de la plaque 24 avec l'axe de l'enveloppe prismatique 22, lorsque la plaque est en position à l'intérieur de l'enveloppe, le rayon des parties courbes 26a, 26b et 26c de forme pratiquement circulaire est inférieur à la distance séparant le point O des parties rectilignes 27a, 27b et 27c de la plaque 24.

L'enveloppe 22 comporte dans sa partie inférieure destinée à recevoir l'embout 24, des fentes 28a, 28b et 28c placées à 120° les unes par rapport aux autres et traversant la surface latérale de l'enveloppe 22 sur toute son épaisseur, à la partie centrale de trois faces du prisme constituant l'enveloppe 22, les fentes 28a, 28b, 28c traversant une face latérale sur deux de la surface prismatique.

De plus, la largeur des fentes 28a, 28b et 28c est supérieure à la longueur des parties rectilignes 27a, 27b et 27c du bord de l'embout 24.

La hauteur des fentes 28 est légèrement supérieure à l'épaisseur de l'embout 24 (voir figure 3).

Comme il est visible sur la figure 4A, l'embout 24 peut être introduit à l'intérieur de l'enveloppe 22, par sa partie inférieure, par simple glissement dans la direction axiale, dans une certaine orientation de la plaque 24 autour de l'axe de l'enveloppe 22. Dans cette orientation, les parties rectilignes 27a, 27b et 27c du bord périphérique de la plaque 24 sont placées en vis-à-vis de trois angles dièdres de la surface prismatique 22 placés à 120° les uns des autres. Les parties courbes 26a, 26b, 26c du bord périphérique de la plaque 24 sont placées de manière qu'une de leurs extrémités soit en vis-à-vis des fentes 28a, 28b et 28c respectivement.

Pour faire passer la plaque 24 de sa position d'engagement représentée sur la figure 4A à sa position d'assemblage représentée sur la figure 4B, on fait tourner la plaque 24 autour de l'axe de l'enveloppe 22, suivant le sens de la flèche 29.

Une rotation d'un angle de 30° permet d'introduire les parties périphériques voisines des bords rectilignes 27a, 27b, 27c de la plaque 24 à l'intérieur des fentes 28a, 28b et 28c respectivement. Les fentes 28a, 28b et 28c offrent en effet un dégagement suffisant pour permettre une introduction des extrémités radiales des parties périphériques rectilignes de la plaque 24 à l'intérieur des fentes 28.

L'embout 24 se trouve alors maintenu à l'intérieur de l'enveloppe 22 de l'élément mobile, par engagement des parties d'extrémité radiale des parties rectilignes du bord de la plaque 24, dans les fentes 28.

Cet assemblage du type à baïonnette peut être réalisé de manière particulièrement simple, en bénéficiant de la forme hexagonale de la section de l'enveloppe 22.

L'arrêt en position de l'embout 24 à l'intérieur de l'enveloppe 22 pour empêcher un mouvement inverse à celui qui vient d'être décrit est assuré par des points de soudure 30 visibles sur la figure 3. Le point de soudure 30 est réalisé par dépôt de métal d'apport uniquement sur la surface inférieure de l'embout 24, au voisinage d'une extrémité d'une partie rectiligne du contour périphérique de cet embout 24.

Sur la figure 4B, on a représenté les six points de soudure 30 permettant de réaliser l'arrêt en rotation de l'embout 24 à l'intérieur de l'enveloppe 22. Ces points de soudure 30 sont placés de manière à venir en butée avec la surface intérieure de l'enveloppe 22, dès que l'embout 24 subit une légère rotation autour de l'axe de l'enveloppe 22. On assure ainsi la fixation de l'embout 24 dans l'enveloppe 22, les parties périphériques voisines des zones rectilignes de l'embout ne pouvant plus ressortir des fentes 28 correspondantes.

Il est donc bien évident qu'aussi bien la mise en place de l'embout 24 dans l'enveloppe 22, le verrouillage de cet embout par rotation et l'arrêt en position de l'embout peuvent être réalisés de manière très simple et très rapide, sans nécessiter de liaison par soudure entre l'embout 24 et l'enveloppe 22.

La structure métallurgique des matériaux constituant l'embout 24 et l'enveloppe 22, obtenue par écrouissage est d'autre part parfaitement conservée. En effet, le dépôt de point de soudure en métal d'apport sur la surface inférieure de l'embout 24 n'entraîne pas d'échauffement local important se traduisant par une destruction de la structure d'écrouissage de l'embout.

Sur les figures 5 et 5A, on a représenté une variante de réalisation des éléments d'arrêt en rotation de l'embout 24' à l'intérieur de l'enveloppe 22'. L'embout 24' dont la forme générale est identique à la forme représentée sur les figures 4A et 4B comporte, aux extrémités des parties rectilignes de son contour périphérique, des languettes découpées 31 qui peuvent être courbées et repliées vers le bas, comme représenté sur la figure 5, pour assurer l'arrêt de l'embout 24'. Les languettes 31 dans leur position repliée vers le bas assurent le même rôle que les points de soudure 30 du mode de réalisation des figures 3, 4A et 4B.

Dans ce cas, les parties correspondantes des éléments d'arrêt de l'embout 24' ne subissent aucun échauffement, le verrouillage et le blocage de l'embout étant réalisés par simple déformation plastique des languettes 31.

Sur les figures 6 et 7, on a représenté un second mode de réalisation d'un élément mobile absorbant suivant l'invention, dans le cas où l'enveloppe 32 de l'élément mobile dont la partie inférieure est représentée sur la figure 6 et la section sur la figure 7 présente une forme cylindrique à section circulaire.

L'enveloppe 32 comporte, à sa partie inférieure, trois découpes 38 placées à 120° les unes des autres et ayant la forme d'un L renversé, comme il est visible sur la figure 6.

L'embout de retenue 34 de l'élément mobile présente trois tétons de fixation 37 également placés à 120° les uns par rapport aux autres à la périphérie de l'embout 34.

L'assemblage de l'embout 34 et de l'enveloppe 32 est réalisé en introduisant les tétons 37 dans la partie de direction axiale des ouvertures 38 en forme de L, la largeur des tétons 37 étant inférieure à la largeur des fentes 38. L'embout 34 est déplacé axialement et vers le haut, jusqu'au moment où les tétons 37 se trouvent au niveau des branches transversales des ouvertures 38 en forme de L.

On effectue alors une légère rotation de l'embout 34 à l'intérieur de l'enveloppe 32, de façon à introduire les tétons 37 dans les branches transversales et circonférentielles des ouvertures 38, comme il est visible sur la figure 6. L'épaisseur de l'embout 34 est inférieure à la largeur des branches circonférentielles des ouvertures 38.

L'arrêt en rotation de l'embout 34 dans l'enveloppe 32 est assuré par des points de soudure 35 déposés à l'extrémité des branches circonférentielles des ouvertures 38, en contact avec le téton 37 correspondant.

La fixation de l'embout 34 dans l'enveloppe 32 est donc assurée par assemblage du type à baïonnette et arrêt en rotation de l'embout, pour assurer son indémontabilité.

Dans tous les cas, l'élément mobile suivant l'invention présente un embout inférieur de retenue des barreaux absorbants, fixé de manière simple à la partie inférieure de l'enveloppe sans qu'il soit nécessaire d'effectuer une jonction par soudure entre l'embout et l'enveloppe.

L'élément mobile suivant l'invention ne comporte pas de moyen d'assemblage mécanique complexe de son embout inférieur de retenue et ne met pas en oeuvre de procédé d'assemblage complexe.

On peut ainsi réduire les coûts de fabrication des assemblages absorbants d'un réacteur nucléaire à neutrons rapides et augmenter simultanément la fiabilité des assemblages absorbants, la zone de jonction entre l'embout et l'enveloppe de l'élément mobile ne se trouvant pas fragilisée et n'étant pas susceptible au gonflement sous irradiation.

L'invention ne se limite pas aux modes de réalisation qui ont été décrits.

C'est ainsi qu'on peut imaginer d'autres moyens d'assemblage du type à baïonnette pour assurer la liaison de l'embout à l'enveloppe.

Les moyens correspondants de l'enveloppe et de l'embout, de direction radiale, sont placés, dans tous les cas, en position d'assemblage, par des déplacements de l'embout par rapport à l'enveloppe en translation axiale et en rotation autour de l'axe de l'enveloppe.

L'arrêt de l'embout en position peut être réalisé par d'autres moyens que des points de soudure ou des languettes rabattables.

L'invention s'applique dans le cas où l'embout inférieur de retenue de l'élément mobile a une forme non plane et par exemple une forme conique ou tronconique.

L'invention s'applique aussi bien dans le cas d'une enveloppe cylindrique que dans le cas d'une enveloppe prismatique ayant une section transversale de forme quelconque.

L'invention s'applique dans le cas de tout élément mobile d'un assemblage absorbant d'un réacteur nucléaire à neutrons rapides.

## Revendications

1. Elément mobile (4,21) d'un assemblage absorbant (1) d'un réacteur nucléaire à neutrons rapides comportant une enveloppe tubulaire (22; 22'; 32) sur laquelle est fixé, à l'une de ses extrémités, un embout (6) de suspension de barreaux (11, 16) en matériau absorbant les neutrons et, à son autre extrémité, un embout (24; 24'; 34) de retenue des barreaux à l'intérieur de l'enveloppe, percé d'ouvertures (25) de passage de fluide, caractérisé par le fait que l'embout de retenue (24, 24', 34) et l'enveloppe (22; 22'; 32) comportent des moyens d'assemblage (27, 28; 37, 38) correspondant du type à baïonnette disposés dans des directions radiales de l'enveloppe (22; 22'; 32), engageables les uns avec les autres par déplacement et orientation de l'embout (24; 24'; 34) à l'intérieur de l'enveloppe (22; 22'; 32), autour de l'axe de l'enveloppe, des moyens d'arrêt en position (30, 31) de l'embout de retenue (24; 24'; 34) en position engagée dans l'enveloppe (22; 22'; 32) étant placés en position de verrouillage après engagement des moyens d'assemblage correspondants de l'embout et de l'enveloppe.

2. Elément mobile suivant la revendication 1, dans le cas où l'enveloppe (22) est de forme prismatique à section hexagonale, caractérisé par le fait que l'embout de retenue (24) comporte un bord périphérique constitué par trois parties courbes (26a, 26b, 26c) séparées par trois parties rectilignes (27a, 27b, 27c) en saillie radiale et que les moyens correspondants d'assemblages de l'enveloppe (22) sont constitués par trois fentes (28a, 28b, 28c), les parties rectilignes en saillie (27a, 27b, 27c) du bord périphérique de l'embout (24) et les fentes (28a, 28b, 28c) de l'enveloppe (22) étant disposées à 120° les unes par rapport aux autres, autour de l'axe de l'enveloppe (22) et l'assemblage de l'embout (24) sur l'enveloppe (22) étant obtenu par introduction axiale de l'embout (24) par l'extrémité inférieure de l'enveloppe (22) suivant une certaine orientation, puis par rotation de 30° de l'embout (24) autour de l'axe de l'enveloppe (22).

3. Elément mobile suivant la revendication 2, caractérisé par le fait que les moyens d'arrêt en position de l'embout de retenue (24) en position engagée dans l'enveloppe (22) sont constitués par des points de soudure (30) rapportés sur la face externe inférieure de l'embout (24) au voisinage des parties d'extrémité rectilignes en saillie (27a, 27b et 27c).

4. ELément mobile suivant la revendication 2, caractérisé par le fait que les moyens d'arrêt en position de l'embout (24) en position engagée dans l'enveloppe (22) sont constitués par des languettes rabattables (31) disposées au voisinage des extrémités des parties rectilignes en saillie (27a, 27b, 27c) de l'embout de retenue (24).

5. Elément mobile suivant la revendication 1, dans le cas où l'enveloppe (32) de l'élément mobile présente une forme cylindrique à section circulaire, caractérisé par le fait que l'embout de retenue (34) comporte au moins trois tétons (37) en saillie radiale vers l'extérieur et que l'enveloppe (32) comporte trois ouvertures (38) en forme de L renversé dont la branche principale débouche à l'extrémité inférieure de l'enveloppe cylindrique (32) et ayant une branche secondaire de direction circonférentielle, les tétons (37) et les ouvertures (38) étant disposés de manière régulièrement répartie à la périphérie de l'embout (34) et de l'enveloppe (32) respectivement et l'assemblage de l'embout (34) et de l'enveloppe (32) étant effectué par introduction axiale de l'embout (34) dans l'enveloppe (32), les tétons (37) étant mis en coïncidence avec les branches principales des ouvertures (38), puis par rotation de l'embout (34) autour de l'axe de l'enveloppe (32), de manière à introduire les tétons (37) dans les branches secondaires circonférentielles des ouvertures (38).

6. Elément mobile suivant la revendication 5, caractérisé par le fait que l'arrêt en position de l'embout (34) en position engagée dans l'enveloppe (32) est réalisé par des points de soudure (35) placés à l'extrémité de raccordement de la branche secondaire de l'ouverture (38) à la branche principale, en contact avec les tétons (37) correspondants en position engagée dans les branches secondaires des ouvertures (38).

## Patentansprüche

1. Bewegliches Element (4,21) einer Absorbereinheit (1) eines Kernreaktors mit schnellen Neutronen, das eine rohrförmige Hülle (22;22';32) aufweist, an der an einem Ende ein Ansatz zum Aufhängen von Stäben (11,16) aus neutronenabsorbierendem Material und am anderen Ende ein von Öffnungen (25) für den Durchtritt eines Fluids durchsetzter Ansatz (24;24';34) zum Halten der Stäbe im Inneren der Hülle befestigt ist, dadurch **gekennzeichnet**, daß der Halteansatz (24,24',34) und die Hülle (22;22';32) entsprechende, in Radialrichtung der Hülle (22;22';32) angeordnete bajonettartige Montagemittel (27,28;37,38) aufweisen, die durch Verschieben und Drehen des Ansatzes (24;24';34) im Inneren der Hülle (22;22';32) um die Achse der Hülle miteinander in Eingriff bringbar sind, wobei Sicherungsmittel (30,31) zur Sicherung des Halteansatzes (24;24';34) in der Eingriffsstellung in der Hülle (22;22';32) in Verriegelungsstellung angebracht sind, nachdem die entsprechenden Montagemittel des Ansatzes und der Hülle ineinandergreifen.

2. Bewegliches Element nach Anspruch 1, für den Fall, daß die Hülle (32) die Form eines Prismas mit hexagonalem Querschnitt hat, dadurch **gekenn****zeichnet**, daß der Halteansatz (24) einen Umfangsrand aufweist, der durch drei gekrümmte Abschnitte (26a,26b,26c) gebildet wird, die durch drei radial vorspringende gerade Abschnitte (27a,27b,27c) getrennt sind, und daß die entsprechenden Montagemittel der Hülle (22) durch drei Schlitze (28a,28b,28c) gebildet werden, wobei die vorspringenden geraden Abschnitte (27a,27b,27c) des Umfangsrandes des Ansatzes (24) und die Schlitze (28a,28b,28c) der Hülle (22) in Winkelabständen von 120° zueinander um die Achse der Hülle (22) angeordnet sind und die Montage des Ansatzes (24) an der Hülle (22) dadurch bewirkt wird, daß der Ansatz (24) in einer bestimmten Orientierung axial durch das untere Ende der Hülle (22) eingeführt und anschließend um 30° um die Achse der Hülle (22) gedreht wird.

3. Bewegliches Element nach Anspruch 2, dadurch **gekennzeichnet**, daß die Sicherungsmittel für den Halteansatz (24) in der Eingriffstellung in der Hülle (22) durch Schweißpunkte (30) gebildet werden, die auf der äußeren unteren Fläche des Ansatzes (24) in der Nähe der geraden vorspringenden Endabschnitte (27a,27b,27c) aufgebracht sind.

4. Bewegliches Element nach Anspruch 2. dadurch **gekennzeichnet**, daß die Sicherungsmittel für den Ansatz (24) in der Eingriffsstellung in der Hülle (22) durch umlegbare Zungen (31) gebildet werden, die in der Nähe der Enden der vorspringenden geraden Abschnitte (27a,27b,27c) des Halteansatzes (24) angebracht sind.

5. Bewegliches Element nach Anspruch 1, für den Fall, daß die Hülle (32) des beweglichen Elements eine zylindrische Form mit kreisförmigem Querschnitt hat, dadurch **gekennzeichnet**, daß der Halteansatz (34) wenigstens drei radial nach außen ragende Vorsprünge (37) aufweist und die Hülle (26) drei umgekehrt L-förmige Öffnungen (38) aufweist, deren Hauptarm zum unteren Ende der zylindrischen Hülle (32) offen ist und die einen in Umfangsrichtung verlaufenden zweiten Arm aufweisen, wobei die Vorsprünge (37) und die Öffnungen (38) gleichmäßig auf dem Umfang des Ansatzes (34) bzw. der Hülle (32) verteilt sind und die Montage des Ansatzes (34) und der Hülle (32) dadurch erfolgt, daß der Ansatz (34) axial in die Hülle (32) eingeführt wird, wobei die Vorsprünge (37) mit den Hauptarmen der Öffnungen (38) fluchten, und anschließend der Ansatz (34) um die Achse der Hülle (32) gedreht wird, so daß die Vorsprünge (37) in die in Umfangsrichtung verlaufenden zweiten Arme der Öffnungen (38) eintreten.

6. Bewegliches Element nach Anspruch 5, dadurch **gekennzeichnet**, daß die Sicherung des Ansatzes (34) in der Eingriffsstellung in der Hülle (32) durch Schweißpunkte (35) gebildet wird, die an dem an den Hauptarm anschließenden Ende des zweiten Armes der Öffnung (38) angebracht sind und mit den entsprechenden, in die zweiten Arme der Öffnungen (38) eingreifenden Vorsprüngen (37) in Berührung stehen.

## Claims

1. A movable element (4, 21) of an absorbent assembly (1) of a fast-neutron nuclear reactor, comprising a tubular casing (22; 22'; 32), to which is fastened, at one of its ends, a cap (6) for the suspension of bars (11, 16) made of neutron-absorbing material and at its other end a cap (24; 24'; 34) for retaining the bars within the casing, and pierced with orifices (25) for the passage of fluid, characterized in that the retaining cap (24; 24'; 34) and the casing (22; 22'; 32) have corresponding connection means (27; 28; 37, 38) of the bayonet type which are arranged in radial directions of the casing (22; 22'; 32) and which are engageable with one another as a result of the displacement and orientation of the cap (24; 24'; 34) within the casing (22; 22'; 32) about the axis of the casing, means (30, 31) for stopping the retaining cap (24: 24'; 34) in the position of engagement in the casing (22; 22'; 32) being placed in the locking position after the engagement of the corresponding connection means of the cap and of the casing.

2. A movable element according to claim 1, where the casing (22) is of prismatic form of hexagonal cross-section, characterized in that the retaining cap (24) has a peripheral edge consisting of three curved parts (26a, 26b, 26c) separated by three radially projecting straight parts (27a, 27b, 27c), and in that the corresponding connection means of the casing (22) consist of three slots (28a, 28b, 28c), the projecting straight parts (27a, 27b, 27c) of the peripheral edge of the cap (24) and the slots (28a, 28b, 28c) of the casing (22) being arranged at 120° relative to one another about the axis of the casing (22), and the connection of the cap (24) to the casing (22) being achieved by axial insertion of the cap (24) via the lower end of the casing (22) in a particular orientation and then by rotation of the cap (24) through 30° about the axis of the casing (22).

3. A movable element according to claim 2, characterized in that the means for stopping the retaining cap (24) in the position of engagement in the casing (22) consist of weld spots (30) attached to the lower outer face of the cap (24) in the vicinity of the projecting straight end parts (27a, 27b and 27c).

4. A movable element according to claim 2, characterized in that the means for stopping the cap (24) in the position of engagement in the casing (22) consist of tongues (31) which can be turned down arranged in the vicinity of the ends of the projecting straight parts (27a, 27b, 27c) of the retaining cap (24).

5. A movable element according to claim 1, where the casing (32) of the movable element is cylindrical with a circular cross-section, characterized in that the retaining cap (34) has at least three studs (37) projecting radially outwards, and in that the casing (32) has three orifices (38) in the form of an upturned L, the main branch of which opens out at the lower end of the cylindrical casing (32) and which has a secondary branch directed circumferentially, the studs (37) and the orifices (38) being uniformly distributed around the periphery of the cap (34) and casing (32), respectively, and the connection of the cap (34) and casing (32) being achieved by axial insertion of the cap (34) into the casing (32), the studs (37) being brought into coincidence with the main branches of the orifices (38), and then by rotating the cap (34) about the axis of the casing (32), so as to introduce the studs (37) into the circumferential secondary branches of the orifices (38).

6. A movable element according to claim 5, characterized in that the cap (34) is locked in the position of engagement in the casing (32) by means of weld spots (35) located at the end joining the secondary branch of the orifice (38) to the main branch, in contact with the corresponding studs (37) in the position of engagement in the secondary branches of the orifices (38).
